# EUROPÄISCHE PATENTANMELDUNG

(11) **EP 0 545 164 A2**
(43) Veröffentlichungstag der Anmeldung: **09.06.1993**
(21) Anmeldenummer: 92119760.4
(22) Anmeldetag: 20.11.1992
(51) Int. Cl.: H04Q 11/04, H04L 12/28

(54) **Verfahren und Schaltungsanordnung zur Regelung des Zugangs zu einem asynchron betriebenen Netz**

(30) Priorität: 30.11.1991 DE 4139578
(71) Anmelder: Alcatel SEL Aktiengesellschaft, D-70435 Stuttgart (DE); ALCATEL N.V., NL-1077 XX Amsterdam (NL)
(72) Erfinder: Hug, Werner, CH-8630 Rüti (CH); Krank, Lothar, W-7250 Leonberg (DE); Eash, Glen, 26715 Raleigh, NC (US)
(74) Vertreter: Brose, Gerhard

(57) **Zusammenfassung**

Stand der Technik: Fernmeldenetze bestehen aus neben-, über- und untergeordneten Teilnetzen mit Netzübergängen. Externverkehr eines Teilnetzes ist physikalisch oder durch Protokoll auf einen Wert beschränkt, der kleiner als der Internverkehr ist.

Technisches Problem: In teilnehmernahen Teilnetzen ergibt sich noch keine Glättung des statistischen Verkehrsaufkommens. Netzübergänge sind entweder für Verkehrsspitzen ausgelegt und in der Regel stark unterbelastet oder für Mittelwerte ausgelegt und haben dann bei Verkehrsspitzen Verluste.

Grundgedanke: Alle Zugänge zu einem Teilnetz werden laufend über die aktuelle Auslastung an einem aus diesem Teilnetz herausführenden Netzübergang informiert.

Beispiel: Die Teilnehmereinrichtungen eines DQDB-Systems weisen Anforderungen von Zeitschlitzen für Externverkehr separat aus.

## Beschreibung

Die Erfindung betrifft ein Verfahren nach da Oberbegriff des Anspruchs 1 und eine Schaltungsanordnung nach dem Oberbegriff des Anspruchs 4.

Die vorliegende Erfindung ist entstanden bei Arbeiten an "Local and Metropolitan Area Networks" nach da Normvorschlag IEEE 802.6. Die Betriebsweise dieser "Networks" is ähnlich wie bei ATM (Asynchronous Transfer Mode). Bei ATM erfolgt die Übertragung von Informationen derart, daß in einer Verbindungsaufbauphase zunächst ein Verbindungsweg und längs diesem eine bestimmte Verkehrskapazität reserviert werden und daß anschließend die anfallenden Informationen in gleichlange Blöcke aufgeteilt und über diesen Verbindungsweg übertragen wird. Jedem solchen Block wird ein "Zellkopf" vorangestellt und bildet mit diesem zusammen eine "Zelle". Der Zellkopf enthält die notwendige Information, um die Zugehörigkeit dieser Zelle zu einer ganz bestimmten Verbindung zu kennzeichnen. Die zu einer Verbindung gehörenden Zellen werden zusammen mit Zellen anderer Verbindungen, mit Leerzellen und mit Steuerzellen auf demselben Übertragungsmedium weitergeleitet. Eine feste Zuordnung zwischen den Zellen einer Verbindung und bestimmten zeitlichen Positionen im gesamten Datenstrom besteht nicht; im Gegensatz zum herkömmlichen synchronen Zeitmultiplex erfolgt die Übertragung asynchron. Diese Betriebsweise ist besonders geeignet für die Datenübertragung, wo das Verkehrsaufkommen oft nur stoßweise erfolgt.

Dieses stoßweise Verkehrsaufkommen gleicht sich in höheren Netzebenen, wo der Verkehr sehr vieler Teilnehmer gebündelt ist, sehr gut aus, so daß sich dort durch die asynchrone Betriebsweise gegenüber der synchronen Betriebsweise eine deutliche Verbesserung ergibt. In niedrigen, teilnehmernahen Netzebenen ergibt sich jedoch kein solcher Ausgleich.

Für die während der Verbindungsaufbauphase erforderliche Reservierung einer bestimmten Verkehrskapazität wird meist entweder ein zeitlicher Mittelwert oder ein Maximalwert vorgegeben. Wird überall für den Maximalwert Kapazität vorgehalten, so ist dies sehr unökonomisch; wird der Mittelwert zugrundegelegt, so kann es zu mehr oder weniger lang andauernden Überlastungen kommen. Solche Überlastungen führen zu Verlusten, wenn sie nicht durch Zwischenspeicher aufgefangen werden. Solche Zwischenspeicher sind aber unerwünscht.

Im Gegensatz dazu sieht der genannte Normvorschlag keine Verbindungsaufbauphasen vor. Er setzt vielmehr voraus, daß vom Netzbetreiber zwischen den Teilnehmern oder Gruppen von Teilnehmern mögliche Verkehrsbeziehungen vorgegeben werden. Eine Vermittlungsfunktion ist dabei nicht vorgesehen. Dies ist aber für die vorliegende Erfindung unerheblich; sie ist ebensogut auf ATM-Systeme mit Vermittlungsfunktion anwendbar.

Für beide System ergibt sich aus dem oben Gesagten ein gemeinsames Problem: Aufgrund des statistischen Verhaltens der Informationsquelle kann es geschehen, daß an bestimmten Stellen im System eine Überlastsituation auftritt, indem entweder die physikalisch vorhandene Kapazität oder ein vorher vereinbarter Schwellwert überschritten wird. Problematisch sind in dieser Hinsicht die Übergänge zwischen zwei Netzen, Netzteilen oder Netzebenen.

Im eingangs genannten Beispiel der "Local and Metropolitan Area Networks" nach IEEE 802.6 sind die Teilnehmer direkt oder über Local Area Networks (LANs) an Metropolitan Area Networks (MANs) angeschlossen. Die an ein und dasselbe LAN angeschlossenen Teilnehmer können auch ohne Zwischenschaltung der MANs miteinander verkehren. Die MANs selbst bestehen aus untereinander verbundenen Teilnetzen. Außerdem bestehen Übergänge in das Öffentliche Fernmeldenetz und in Datennetze.

Jedes einzelne dieser Teilnetze (TNs) besteht aus zwei Bussystemen, durch die die LANs und die Teilnehmer untereinander und mit Übergängen in andere Netze verbunden sind. Die TNs unterscheiden prinzipiell nicht zwischen angeschlossenen LANs und (Einzel-) Teilnehmern. Auch ein LAN kann wie ein TN aus zwei Bussystemen aufgebaut sein. Die Bussysteme eines TNs führen dessen gesamten Verkehr, der sich aus Internverkehr und Externverkehr zusammensetzt. Der Zugang zu den Bussystemen des TNs wird durch ein Netzzugangsverfahren geregelt, das derzeit im o.g. Normvorschlag IEEE 802.6 beschrieben ist. Durch dieses Netzzugangsverfahren wird aber nur sichergestellt, daß der Gesamtverkehr in diesem TN die vorgegebenen Grenzen auch nicht kurzfristig überschreitet. Da an Netzübergängen in der Regel nicht der Gesamtverkehr in das andere Netz übergehen kann, kann es vorkommen, daß ein Teil des Externverkehrs zwar Zugang zum TN erhält, dieses aber am Netzübergang nicht verlassen kann und dort verloren geht.

Prinzipiell das gleiche Problem tritt auch bezüglich des für einen einzelnen Teilnehmer (oder ein einzelnes LAN) bestimmten Verkehrs auf, da jeder Teilnehmer grundsätzlich auch mit mehreren anderen Teilnehmern in Verbindung stehen kann, die (quasi-)gleichzeitig zu diesem Teilnehmer hin senden können, dabei das TN noch nicht überbelasten, den einzelnen Teilnehmer aber dennoch kurzfristig überbelasten.

Auch bei anderen Systemen, bei denen mehrere Sender und Empfänger über ein gemeinsames Übertragungsmedium verbunden sind, beispielsweise ein an einen gemeinsamen Bus angeschlossenes Mehrprozessorsystem, kann dasselbe Problem auftreten, sofern diese Systeme nicht ausnahmsweise synchron, also mit Einzelkanälen fest vorgegebener Kapazität, betrieben werden.

Die nachfolgend beschriebene Lösung ist auf alle derartigen Systeme anwendbar. Die hier verwendeten Begriffe "erstes Netz", "weiteres Netz" und "Netzübergang" sind deshalb sehr allgemein zu verstehen.

Das dargelegte Problem wird gelöst durch ein Verfahren nach Anspruch 1 und eine Schaltungsanordnung nach Anspruch 4, wobei die Begriffe "erstes Netz", "weiteres Netz" und "Netzübergang" sehr allgemein zu verstehen sind.

Der Grundgedanke besteht darin, den Zugang zu einem Übertragungsmedium nicht nur von der aktuellen Auslastung des Übertragungsmediums selbst, sondern auch von der aktuellen Auslastung des Zielempfängers oder eines Zwischenempfängers abhängig zu machen. Zu diesem Zweck werden alle Zugänge zu einem Teilnetz laufend über die aktuelle Auslastung an einem aus diesem Teilnetz herausführenden Netzübergang informiert.

Die Erfindung wird beschrieben am Beispiel des vom IEEE im Normvorschlag IEEE 802.6 vorgeschlagenen DQDB-Systems (DQDB = Distributed Queue Dual Bus). Gemäß der Erfindung weisen die Teilnehmereinrichtungen dieses Systems Anforderungen von Zeitschlitzen für Externverkehr separat aus.

Vorteilhafte Ausgestaltungen der Erfindung sind den Unteransprüchen zu entnehmen.

Im folgenden wird die Erfindung am Beispiel der Anwendung beim o.g. DQDB-System beschrieben.
- Fig. 1: zeigt ein Beispiel eines Metropolitan Area Networks.
- Fig. 2: zeigt den Grundaufbau eines DQDB-Netzes.
- Fig. 3: zeigt den Aufbau der Nachrichtenstruktur eines DQDB-Netzes, wobei Fig. 3a ein Slot Format, Fig. 3b ein Access Control Field, Fig. 3c ein Segment und Fig. 3d einen Segment Header zeigt.
- Fig. 4: zeigt die Zugriffssteuerung für einen Bus, Bus A, eines DQDB-Netzes.
- Fig. 5: zeigt den Vorgang der Zugriffssteuerung, wobei Fig. 5a den laufenden Überwachungsvorgang und Fig. 5b einen Zugriffsvorgang darstellt.

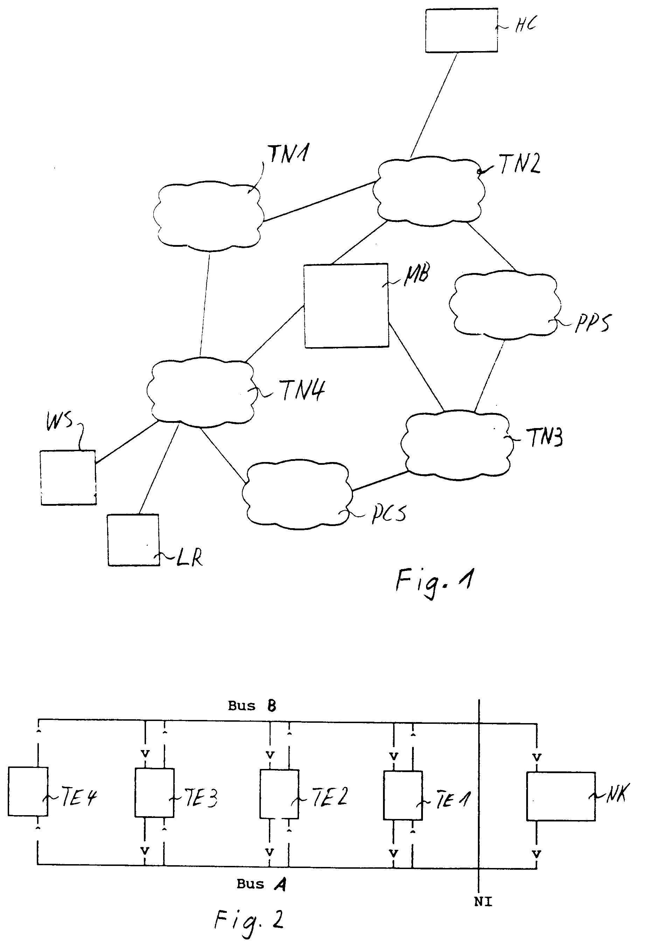

Fig. 1 stellt das im o.g. Normvorschlag beispielhaft dargestellte' Metropolitan Area Network, MAN, dar. Dieses MAN weist mehrere Teilnetze, TN, auf. Diese TNs, TN1, ..., TN4, sind von der Art DQDB. Angeschlossen an diese TNs sind eine Workstation WS, ein Host Computer HC und ein LAN, LR, beispielsweise ein Ringnetz. Die TNs sind teils direkt, teils über eine Multiport Bridge MB miteinander verbunden. Weiter bestehen Übergänge zu einem (dem) öffentlichen Leitungsvermittlungsnetz PCS und zu einem (dem) öffentlichen Paketvermittlungsnetz PPS. Nicht eingezeichnet ist die Tatsache, daß an jedes einzelne TN mehrere Endteilnehmer angeschlossen sind, wobei prinzipiell kein Unterschied zwischen dem Anschluß eines Endteilnehmers und dem Übergang in ein anderes Netz besteht.

Fig. 2 zeigt den Grundaufbau eines DQDB-Netzes, also eine vereinfachte Form der TNs TN1, ..., TN4. Erkennbar ist der Dual Bus, der aus den beiden Bussen BusA und BusB besteht. Weiter sind vier Teilnehmereinrichtung TE1, ..., TE4 und ein Netzknoten NK eingezeichnet. Weiter ist ein Netzübergang NI eingezeichnet. Alle Teilnehmereinrichtungen und der Netzknoten haben Zugang zu beiden Bussen, wobei die beiden Busse gegenläufig betrieben werden. Der Netzknoten muß nicht zwingend am Ende der Busse liegen, insoweit ist er gleichwertig mit den Teilnehmereinrichtungen. Der Netzknoten unterscheidet sich nur insoweit von den Teilnehmereinrichtungen, als der für ihn bestimmte oder von ihm ausgehende Verkehr in ein Netz gleicher oder höherer Hierarchie übergeht, während die Teilnehmereinrichtungen allenfalls als Netze niedrigerer Hierarchie angesehen werden können. Wegen des statistischen Verkehrsaufkommens ist es aber sowohl im Netzknoten als auch bei den Teilnehmereinrichtungen möglich, daß sie zumindest kurzfristig den für sie bestimmten Verkehr nicht aufnehmen können, obwohl dieses das TN selbst, d.h. die Busse A und B noch nicht überlastet.

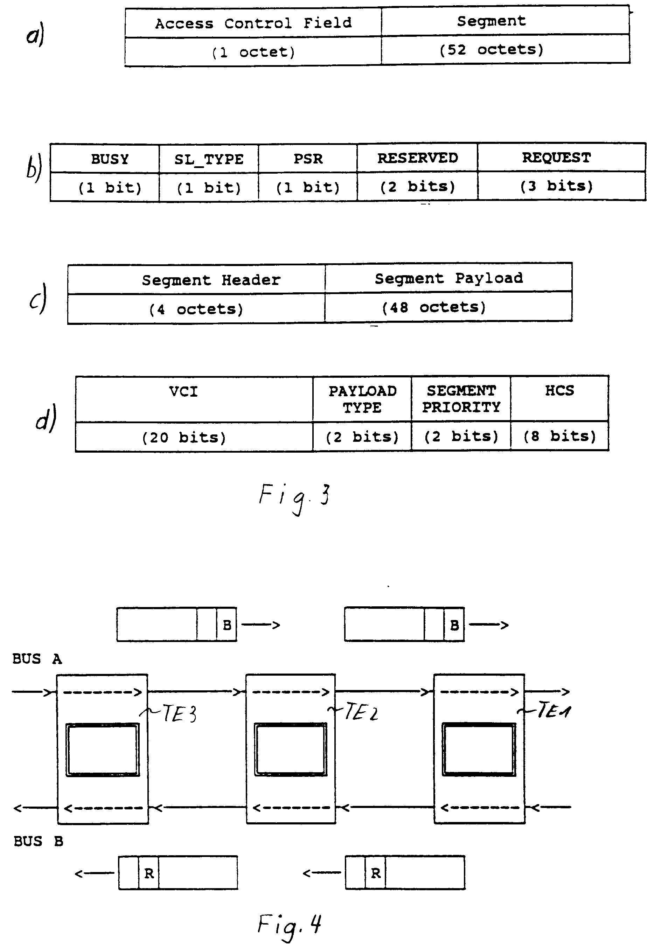

Die Fig. 3 ist unterteilt in die Fig. 3a bis 3d und zeigt den Aufbau der Nachrichtenstruktur eines DQDB-LANs. Fig. 3a zeigt den von IEEE als Slot Format bezeichneten Grundaufbau der kleinsten übertragbaren Informationseinheit. Jeder Slot umfaßt 53 Oktette, dessen erstes Oktett ein Feld zur Zugriffssteuerung, Access Control Field ACF, ist, während die weiteren 52 Oktette als Segment bezeichnet werden, das der Informationsübertragung dient.

Fig. 3b zeigt den näheren Aufbau des Access Control Fields ACF. Das erste Bit, BUSY, zeigt den Belegungszustand des diesem ACF folgenden Segments an. Das zweite Bit, SL TYPE, zeigt zusammen mit dem ersten Bit die Art der Belegung oder möglichen Belegung des zugehörigen Segments an. Das folgende als PSR bezeichnete Bit ist für die vorliegende Erfindung ohne Bedeutung. Es folgen zwei noch nicht vergebene Bits, RESERVED, sowie drei zur Anforderung freier Slots dienende Bits, REQUEST.

Ein Segment besteht, wie Fig. 3c zeigt, aus einem vier Oktette umfassenden Kopfteil, Segment Header, und aus 48 Oktetten Nutzlast, Segment Payload. Der Segment Header dient der Zuordnung des gesamten Segments zu irgendeinem Vorgang, etwa einem Steuervorgang oder einer bestimmten Verbindung. Der Kopfteil, Segment Header, ist in Fig. 3d näher dargestellt. Die ersten 20 Bits stellen eine Art Verbindungsnummer, den Virtual Channel Identifier VCI, dar. Es folgen vier Bits zur Charakterisierung einer bestimmten Informationsart, PAYLOAD TYPE, und Priorität, SEGMENT PRIORITY. Die letzten acht Bits, Header Check Sequence HCS, dienen der Fehlererkennung und Fehlerkorrektur.

Das DQDB-System weist, wie manche anderen Systeme auch, die Möglichkeit auf, sowohl synchrone als auch asynchrone Verbindungen zu ermöglichen. Synchrone Verbindungen setzen eine periodisch wiederkehrende Rahmenstruktur des Informationsflusses voraus. Beim DQDB-System wird diese Rahmenstruktur von denjenigen Teilnehmereinrichtungen oder Netzknoten vorgegeben, von denen die Busse ausgehen. Im Beispiel nach Fig. 2 ist dies NK für Bus A und TE4 für Bus B. Für synchrone Verbindungen werden vom Netzbetreiber Slots bereitgestellt und zugeteilt und damit mögliche Verkehrsbeziehungen festgelegt und später in jeden Rahmen von der die Rahmenstruktur erzeugenden Einrichtung, hier TE4 und NK, innerhalb des Rahmens vorgegeben. Hierzu werden im Access Control Field dieses Slots das BUSY-Bit und das SL TYPE-Bit auf 1 gesetzt und der Kopfteil, Segment Header, ausgefüllt. Die an einer solchen synchronen Verbindung beteiligten Stationen können nun entweder allein an der zeitlichen Lage innerhalb des Rahmens oder unter Zuhilfenahme des Virtual Channel Identifiers VCI die ihnen zugeteilte Kapazität erkennen und die zu sendende Nutzlast dort in den Datenstrom einfügen oder auf der Empfangsseite daraus entnehmen. Da für synchrone Verkehrsbeziehungen überall, sowohl beim Sender und Empfänger, als auch im Netz und an Netzübergängen, bestimmte Zeitschlitze innerhalb des Rahmens reserviert sind, sind hier keine Kollisionen möglich und es können auch keine Verluste durch Überlast auftreten.

Bei asynchronen Verkehrsbeziehungen müssen Slots entsprechend dem aktuellen Bedarf zugeteilt werden. Dabei kann es an verschiedenen Stellen zu Kollisionen kommen. Beim DQDB-System werden Kollisionen beim Netzzugang wie nachfolgend beschrieben vermieden. Für Überlastungen an Netzübergängen und beim Empfangen gibt die vorliegende Erfindung einen Lösungsvorschlag.

Fig. 4 zeigt die Zugriffssteuerung für Bus A des DQDB-Systems. Die Zugriffssteuerung für Bus B erfolgt entsprechend. Gezeigt sind, in etwas anderer Darstellung als bei Fig. 2, die beiden Busse Bus A und Bus B, sowie die drei Teilnehmereinrichtungen TE3, TE2 und TE1. Darüber ist der Datenfluß auf Bus A, darunter der auf Bus B angedeutet. Dargestellt sind zwei Slots auf Bus A und zwei Slots auf Bus B. Für die Zugriffssteuerung für Bus A sind die BUSY-Bits B in den Slots auf Bus A und die REQUEST-Bits R in den Slots auf Bus B zuständig. Nur diese sind in Fig. 4 näher gekennzeichnet. Daß tatsächlich drei REQUEST-Bits pro Slot vorgesehen sind, kann hier bei der Erklärung ihrer Funktion unberücksichtigt bleiben (und bleibt auch beim Normvorschlag P802.6 an dieser Stelle unberücksichtigt).

Jede Station (TE3, ..., TE1) erfährt auf dem Bus B, wieviele Slots von den ihr auf dem Bus B vorangehenden Stationen angefordert werden. Diese für den Bus A angeforderten Slots müssen nun auf Bus A freigehalten werden. Von den auf Bus A noch freien Slots müssen deshalb soviele freigelassen werden, wie von einer auf Bus A nachfolgenden Station angefordert werden. Erst dann darf eine Station einen der vorbeikommenden Slots für sich belegen.

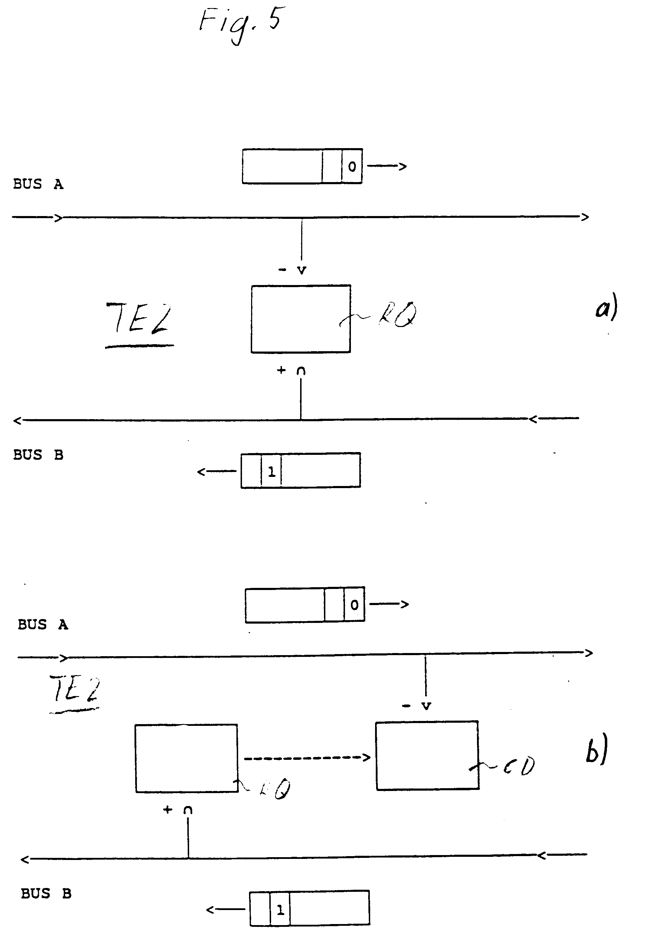

Anhand der Fig. 5 wird der Vorgang am Beispiel der Teilnehmereinrichtung TE2 näher erläutert. Der Gesamtvorgang unterteilt sich in eine laufende Überwachung, Fig. 5a, und den Zugriffsvorgang selbst, Fig. 5b. Die Teilnehmereinrichtung TE2 enthält einen Anforderungszähler RQ, der durch Anforderung auf Bus B (REQUEST = 1) vorwärtsgezählt und durch freie Slots auf Bus A (BUSY = 0) rückwärtsgezählt wird. Damit ist jederzeit bekannt, wieviele noch offene Anforderungen bei den an Bus A nachgeordneten Stationen noch vorliegen. Die Teilnehmereinrichtung TE2 muß aber nicht warten, bis überhaupt keine Anforderungen nachgeordneter Stationen mehr vorliegen. Es genügt vielmehr, daß keine älteren Anforderungen mehr vorliegen. Hat die Teilnehmereinrichtung TE2 eine eigene Anforderung, so setzt sie ein noch ungesetztes REQUEST-Bit auf Bus B, übernimmt den aktuellen Zählerstand des Anforderungszählers RQ in einen Ablaufzähler CD und setzt den Anforderungszähler RQ auf Null. Durch auf Bus A vorbeikommende freie Slots (BUSY = 0) wird nun der Ablaufzähler CD rückwärtsgezählt. Bei dessen Zählerstand Null kann TE2 den nächsten freien Slot belegen. Dann geht die Steuerung wieder auf den Anforderungszähler RQ über, der zwischenzeitlich bereits weitere Anforderungen registriert hat.

Das soeben beschriebene läuft unabhängig davon in gleicher Weise auch für den Zugriff zu Bus B ab, wofür nochmals pro Teilnehmereinrichtung ein Anforderungszähler und ein Ablaufzähler vorgesehen sind.

Bei Verwendung unterschiedlicher Prioritäten, die derzeit noch nicht berücksichtigt ist, kann durch die insgesamt drei REQUEST-Bits zwischen drei oder gar sieben verschiedenen Prioritäten unterschieden werden. Für jede dieser Prioritäten ist dann pro Bus eine eigene Zugriffssteuerung wie anhand der Fig. 5 beschrieben, erforderlich. Dabei wird jede Anforderung mit höherer Priorität gleichzeitig für jede niedrigere Priorität als Anforderung gewertet. Weiter wird jede Erfüllung einer Anforderung mit höherer Priorität gleichzeitig als Erfüllung einer Anforderung mit niedrigerer Priorität gewertet. Die längs einem der beiden Busse diesem Bus zugeordneten Zähler gleicher Priorität wirken wie eine verteilte Warteschlange (distributed queue DQ) mit FIFO-Charakter.

Erfindungsgemäß wird nun dasselbe Zugriffsverfahren zweimal parallel angewendet, nämlich einmal für Internverkehr und einmal für Externverkehr. Dafür sind dieselben Zähler ein weiteres Mal erforderlich. Die das Netz über den Netzknoten NK verlassenden Slots müssen bei ihrer Anforderung als solche gekennzeichnet werden. Dies kann dadurch erfolgen, daß eines der beiden RESERVED-Bits im Access Control Field oder auch eines der REQUEST-Bits als EXTERNAL-Bit verwendet wird. Dabei kann dann Intern- und Externverkehr getrennt durch die verbleibenden REQUEST-Bits einerseits und das EXTERNAL-Bit andererseits angefordert werden oder es kann durch das EXTERNAL-Bit die Art der Anforderung und durch die REQUEST-Bits deren Priorität gekennzeichnet werden.

Unter der Annahme, daß pro Slot, also durch alle drei REQUEST-Bits zusammen, nur ein neuer Slot angefordert werden kann, ist eine Überlastung der beiden Busse A und B selbst nicht möglich. Deshalb genügt es beim zugrundegelegten Verfahren, wenn die Anforderung nur auf demjenigen Bus erfolgt, der gegenläufig zu dem Bus ist, auf den zugegriffen werden soll. Bei der separaten Anforderung von Slots für Externverkehr können weit mehr Anforderungen erfolgen als Zuteilungen möglich sind. Diese Anforderungen müssen deshalb an alle Teilnehmer, also über beide Busse verteilt werden, damit weitere Anforderungen bei Überlastung unterdrückt werden oder sonstige Regulative eingreifen können.

Nicht nur beim Bilden, sondern auch bei der Abarbeitung der beiden Anforderungsschlangen muß zwischen beiden Verkehrsarten unterschieden werden. Auch hierfür kann eines der beiden RESERVED-Bits verwendet werden. Beispielsweise kann in der Teilnehmereinrichtung TE4, von der der Bus B ausgeht, auf dem allein abgehender Externverkehr möglich ist, im Rahmen der Kapazität des Netzknotens und im Rahmen der aktuellen Anforderungen einzelne Slots durch Setzen eines RESERVED-Bits für Externverkehr reservieren.

Durch das beschriebene Verfahren ist jede der Teilnehmereinrichtungen TE1, ..., TE4 laufend implizit oder explizit über die aktuelle Auslastung des Netzübergangs im Netzknoten NK informiert und sei es nur durch die Aussage "noch frei" oder "nicht mehr frei". Diese Information muß nun, um tatsächlich Überlastungen zu vermeiden, selbstverständlich noch dahingehend ausgewertet werden, daß nur dann Externverkehr abgesandt wird, wenn sowohl das TN als auch der Netzübergang diesen aufnehmen können.

Eine andere Möglichkeit, die einzelnen an dem hier aus den Bussen A und B bestehenden Netz angeschlossenen Stationen über die aktuelle Auslastung des Netzübergangs zu informieren, liegt beispielsweise darin, daß einmal pro Rahmen ein Slot über beide Busse vollständig umläuft, in dessen Nutzlastteil, Segment Payload, alle angeschlossenen Stationen ihre Anforderungen für den nächsten Rahmen einschreiben und dem dann auch alle Stationen die Anforderung der anderen Stationen entnehmen können. Sind einer Station die Anforderungen aller Stationen bekannt und ist eine klare Verteilungsvorschrift vorgegeben, so kann jede Station bestimmen, wann welche Stationen, insbesondere sie selbst, senden darf.

In einem synchronen, umlaufenden Slot kann recht viel Information über die aktuelle Auslastung dieses Netzes verteilt werden. Damit kann nicht nur die Überlastung eines einzigen Netzübergangs oder des Netzes selbst, sondern die Überlastung auch weiterer Netzübergänge oder auch einzelner Teilnehmereinrichtungen vermieden werden.

Letztlich müssen, um die Überlastung einer einzelnen Einrichtung zu verhindern, die an ein Netz angeschlossen ist, alle anderen Einrichtungen, die zu dieser Überlastung beitragen können, über die jeweilige aktuelle Auslastung informiert sein. Durch Auswertung dieser Information mittels einer geeigneten Verteilungsvorschrift kann dann eine Überlastung vermieden werden.

## Patentansprüche

1. Verfahren zur Regelung des Zugangs zu einem asynchron betriebenen ersten Netz, das mittels eines Netzübergangs den Zugang zu einem weiteren Netz ermöglicht,
**dadurch gekennzeichnet,** daß alle Einrichtungen über die der Zugang zum ersten Netz erfolgt, über die aktuelle Auslastung des Netzübergangs informiert werden.

2. Verfahren nach Anspruch 1, dadurch gekennzeichnet, daß die Information über die Auslastung des Netzübergangs nach Art eines Verfahrens zur Regelung eines Netzzugangs erfolgt.

3. Verfahren nach Anspruch 2, dadurch gekennzeichnet, daß der Zugang zum ersten Netz durch zwei gleichartige Verfahren zur Regelung eines Netzzugangs derart geregelt wird, daß auf jeden Fall der Zugang zum ersten Netz und gegebenenfalls auch der Übergang ins weitere Netz vor dem Zugang gewährleistet sein muß.

4. Schaltungsanordnung zur Regelung des Zugangs zu einem asynchron betriebenen ersten Netz, das mittels eines Netzübergangs den Zugang zu einem weiteren Netz ermöglicht,
**dadurch gekennzeichnet,** daß die Schaltungsanordnung ein Register (RQ, CD) zur Aufnahme einer Information über die Auslastung des Netzübergangs aufweist.
